# EUROPEAN PATENT APPLICATION

(11) **EP 3 110 067 A1**
(43) Date of publication of application: **28.12.2016**
(21) Application number: 15749125.9
(22) Date of filing: 20.01.2015
(51) Int. Cl.: H04L 12/24, G06F 11/00, H04L 12/28, H04M 3/00, H04W 84/18

(54) **NETWORK SYSTEM, MANAGEMENT APPARATUS, COMMUNICATION APPARATUS, MANAGEMENT METHOD, AND COMMUNICATION METHOD**

(30) Priority: 17.02.2014 JP 2014027147
(71) Applicant: NEC Corporation, Tokyo 108-8001 (JP)
(72) Inventor: OIKAWA, Shingo, Tokyo 108-8001 (JP)
(74) Representative: Glawe, Delfs, Moll
(86) International application number: PCT/JP2015/000219
(87) International publication number: WO 2015/122119

(57) **Abstract**

An NMS (10), which is a management apparatus connected to a plurality of NEs (1) forming a network so that the NMS (10) can communicate with the plurality of NEs (1), includes: an update information transmission unit (101) that transmits update information for an update process to the plurality of NEs (1), the update process requiring a suspension of communication; and an update time transmission unit (102) that transmits an update time to the plurality of NEs (1) after the plurality of NEs (1) receive the update information, the update time being a time at which the update process is performed. It is thereby possible to shorten the update times of the communication apparatuses in the network.

## Description

### Technical Field

The present invention relates to a network system, a management apparatus, a communication apparatus, a management method and a communication method and, particularly, to a network system that manages a plurality of communication apparatuses, a management apparatus, a communication apparatus, a management method and a communication method.

### Background Art

A network management system that manages a network including a plurality of communication apparatuses has been known. In general, in a communication apparatus, firmware (F/W) embedded in the communication apparatus is updated as the need arises, and therefore a network management system manages the update of the firmware for a plurality of communication apparatuses.

As a technique related to the update of firmware, for example, Patent Literature 1 to 5 has been known. In Patent Literature 1 to 4, firmware of an apparatus connected to a network is updated. In Patent Literature 5, firmware of a processing unit provided inside an apparatus is updated.

### Citation List

### Patent Literature

Patent Literature 1: Japanese Unexamined Patent Application Publication No. 2012-253431
Patent Literature 2: Japanese Unexamined Patent Application Literature No. 2006-339926
Patent Literature 3: Japanese Unexamined Patent Application Publication No. 2004-265304
Patent Literature 4: Japanese Unexamined Patent Application Publication No. 2004-139572
Patent Literature 5: Japanese Unexamined Patent Application Publication No. 2013-161401

### Summary of Invention

### Technical Problem

In related art such as Patent Literature 1, firmware is transferred to each of communication apparatuses from a network management system or the like, and the firmware of each of the communication apparatuses is updated one after another.

However, in the related art, because the firmware of each of the communication apparatuses included in the network is updated one after another, there is a problem that, depending on the configuration of the network, the time required for updating the firmware or the like is increased.

The present invention has been made in view of the above problem, and an exemplary object of the present invention is to provide a network system, a management apparatus, a communication apparatus, a management method and a communication method capable of shortening the time required for updating the communication apparatus in the network.

### Solution to Problem

A network system according to the present invention is a network system including a plurality of communication apparatuses forming a network, and a management apparatus connected to the plurality of communication apparatuses so that the management apparatus can communicate with the plurality of communication apparatuses, wherein the management apparatus includes: an update information transmission unit that transmits update information for an update process to the plurality of communication apparatuses, the update process requiring a suspension of communication; and an update time transmission unit that transmits an update time to the plurality of communication apparatuses after the plurality of communication apparatuses received the update information, the update time being a time at which the update process is performed, and each of the plurality of communication apparatuses includes; an update information reception unit that receives the transmitted update information; an update time reception unit that receives the transmitted update time after the update information reception unit received the update information; and an update process unit that performs the update process using the update information at the received update time.

A management apparatus according to the present invention is a management apparatus connected to a plurality of communication apparatuses forming a network so that the management apparatus can communicate with the plurality of communication apparatuses, the management apparatus including: an update information transmission unit that transmits update information for an update process to the plurality of communication apparatuses, the update process requiring a suspension of communication; and an update time transmission unit that transmits an update time to the plurality of communication apparatuses after the plurality of communication apparatuses received the update information, the update time being a time at which the update process is performed.

A management apparatus according to the present invention is a management apparatus connected to a plurality of communication apparatuses forming a network so that the management apparatus can communicate with the plurality of communication apparatuses, the management apparatus including: a communication apparatus designation input unit that receives an input of designation of at least one communication apparatus among the plurality of communication apparatuses, an update information identification unit that identifies update information for an update process to be transmitted to the designated communication apparatus, the update process requiring a suspension of communication; and an update time input unit that receives an input of an update time to be transmitted to the designated communication apparatus after the designated communication apparatus received the update information, the update time being a time at which the update process is performed.

A communication apparatus according to the present invention is a communication apparatus forming a network with other communication apparatuses and connected to a management apparatus so that the communication apparatus can communicate with the management apparatus, the communication apparatus including: an update information reception unit that receives update information for an update process transmitted from the management apparatus, the update process requiring a suspension of communication; an update time reception unit that receives an update time transmitted from the management apparatus after the update information reception unit received the update information; and an update process unit that performs the update process using the update information at the received update time.

A management method according to the present invention is a management method in a network system comprising a plurality of communication apparatuses forming a network, and a management apparatus connected to the plurality of communication apparatuses so that the management apparatus can communicate with the plurality of communication apparatuses, wherein the management apparatus transmits update information for an update process to the plurality of communication apparatuses, the update process requiring a suspension of communication, the management apparatus transmits an update time to the plurality of communication apparatuses after the plurality of communication apparatuses received the update information, the update time being a time at which the update process is performed, the plurality of communication apparatuses receive the transmitted update information, the plurality of communication apparatuses receive the transmitted update time after received the update information, and the plurality of communication apparatuses perform the update process using the update information at the received update time.

A management method according to the present invention is a management method in a management apparatus connected to a plurality of communication apparatuses forming a network so that the management apparatus can communicate with the plurality of communication apparatuses, the management method including: transmitting update information for an update process to the plurality of communication apparatuses, the update process requiring a suspension of communication; and transmitting an update time to the plurality of communication apparatuses after the plurality of communication apparatuses received the update information, the update time being a time at which the update process is performed.

A management method according to the present invention is a management method in a management apparatus connected to a plurality of communication apparatuses forming a network, the management method including: receiving an input of designation for at least one communication apparatus among the plurality of communication apparatuses; identifying update information for an update process to be transmitted to the designated communication apparatus, the update process requiring a suspension of communication; and receiving an input of an update time to be transmitted to the designated communication apparatus after the designated communication apparatus received the update information, the update time being a time at which the update process is performed.

A communication method according to the present invention is a communication method in a communication apparatus forming a network with other communication apparatuses and connected to a management apparatus so that the communication apparatus can communicate with the management apparatus, the communication method including: receiving update information for an update process to be transmitted from the management apparatus, the update process requiring a suspension of communication; receiving the update time transmitted from the management apparatus after received the update information; and performing the update process using the update information at the received update time.

### Advantageous Effects of Invention

According to the present invention, it is possible to provide a network system, a management apparatus, a communication apparatus, a management method and a communication method capable of shorting the time requiring for updating the communication apparatus in the network.

### Brief Description of Drawings

Fig. 1 is a configuration diagram showing an outline of a network system according to an exemplary embodiment;
Fig. 2 is a diagram showing an operation example of a network system according to the exemplary embodiment;
Fig. 3 is a configuration diagram showing a configuration of a network system according to a first exemplary embodiment;
Fig. 4 is a flowchart showing an operation of the network system according to the first exemplary embodiment;
Fig. 5 is a diagram showing a display screen example of the network system according to the first exemplary embodiment;
Fig. 6 is a configuration diagram showing a configuration of a network system according to a second exemplary embodiment;
Fig. 7 is a configuration diagram showing an outline of a network system according to a reference example;
Fig.8 is a flowchart showing an operation of a network system according to a first reference example;
Fig. 9 is a diagram showing an operation example of the network system according to the first reference example;
Fig. 10 is a flowchart showing an operation of a network system according to a second reference example; and
Fig. 11 is a diagram showing an operation example of the network system according to a second reference example.

### Description of Embodiments

### (Reference example)

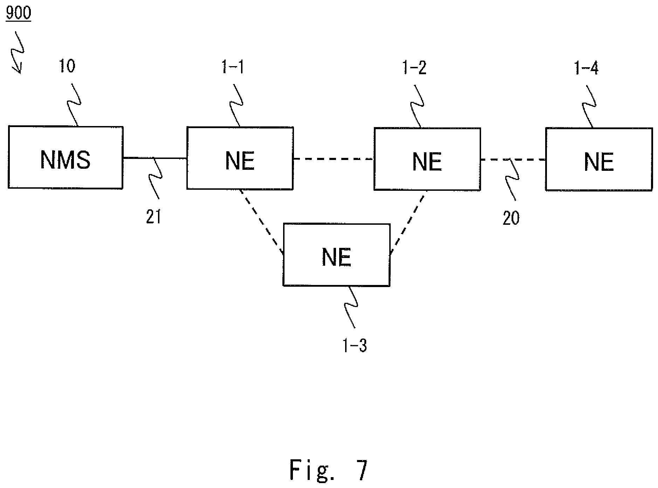

Prior to describing exemplary embodiments, a reference example in which the exemplary embodiment is not applied will be described. Fig. 7 shows a configuration of a network system 900 according to the reference example. As shown in Fig. 7, the network system 900 according to the reference example includes a plurality of NEs (Network Elements) 1-1 to 1-4 (any one of the NEs is also referred to as NE 1), and an NMS (Network Management System) 10.

The plurality of NEs 1-1 to 1-4 are connected via DCCs (Data Communications Channels) 20 respectively, and form a DCN (Data Communication Network). The DCN is a data communication system for transferring data via a wired line or a wireless line. The DCC is a channel for transmitting a control signal different from a main signal (transfer data). In this example, the DCCs 20 connect the NE 1-1 and NE 1-2, the NE 1-1 and NE 1-3, the NE 1-2 and NE 1-3, and the NE 1-2 and NE 1-4.

The NE 1-1 and the NMS 10 are connected via a LAN 21 so that they can communicate with each other. The NMS 10 manages configurations, connection relations and so on of NEs 1-1 to 1-4 via the LAN 21. Note that the network is not limited to the LAN. The NE 1-1 and the NMS 10 may be connected via other networks such as WAN. When updating firmware of the NEs 1-1 to 1-4 under the control of the NMS 10, if the firmware of one NE 1 is being updated, the firmware of another NE 1 placed behind the one NE 1 as observed from the NMS 10 cannot be updated. For example, if the NE 1-2 is updating its firmware, it is impossible to update the firmware of the NE 1-4 that is connected behind the NE 1-2. That is, when the NE 1 updates its firmware, the NE 1 needs to be restarted and hence the communication of the NE 1 is suspended. Therefore, it is impossible to control another NE 1 from the NMS 10 via the NE 1 which is updating its firmware.

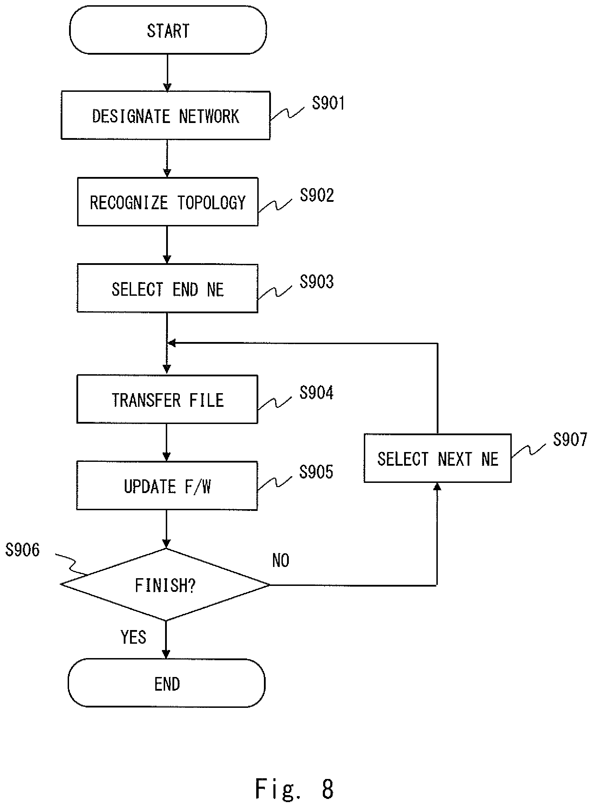

As an example of how to avoid the above problem, Reference Examples 1 and 2 are conceivable. Fig. 8 shows an operation of the reference example 1. In the reference example 1, the influence of the updating of firmware is avoided by recognizing a topology of a network that includes a target NE 1 and performing an update of firmware from an NE 1 which is placed at the end of the network.

That is, as shown in Fig. 8, in the reference example 1, first, the NMS 10 designates the range of the network including the NE 1 which updates its firmware (S901) and recognizes a topology of the designated network (S902). Then, the NME 10 selects an NE 1 which is placed at the end of the recognized network (S903) and transfers a file for updating the firmware to the selected NE 1 (S904). Upon receiving the file, the NE 1 updates the firmware using the received file (S905). The NMS 10 determines whether or not all of the NEs 1 have already updated their firmware (S906) and, if there is an NE 1 which has not updated its firmware yet, selects that NE 1 as an NE 1 which will update its firmware the next time (S907). Then the step S904 and the subsequent steps are repeated.

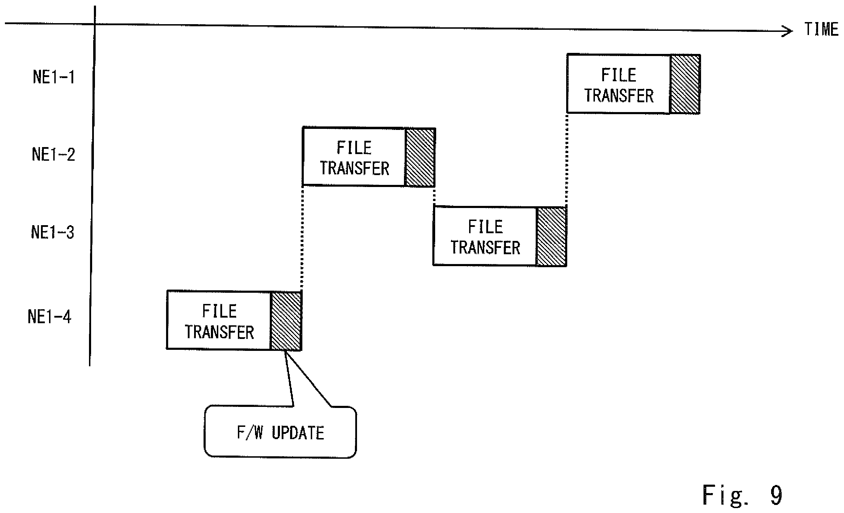

For example, assume that, in the reference example 1, the network including the NE 1-1 to NE 1-4 in the configuration shown Fig. 7 is designated. In this case, as shown in Fig. 9, first, the NE 1-4 which is placed at the end of the network transfers the file and updates its firmware, and then, the transfer of the file and update of their firmware are performed in the order of the NE 1-2, the NE 1-3 and NE 1-1 in accordance with the connection order of the network.

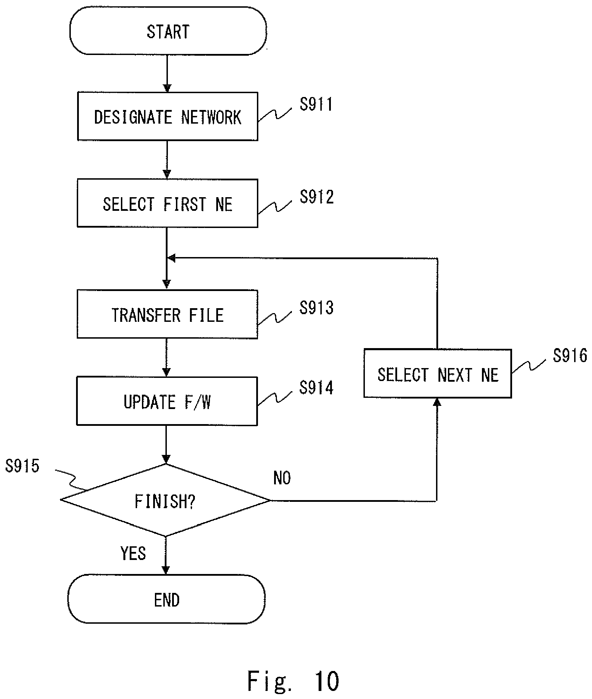

Fig. 10 shows an operation of the reference example 2. In the reference example 2, after the NE 1 which is placed in front of the target NE 1 as viewed from the NMS 10 has completed the update of its firmware and the restart of the apparatus, the update of the firmware of the target NE 1, which is placed behind the aforementioned NE 1, is performed. Therefore, the influence of the update of the firmware is avoided.

That is, as shown in Fig. 10, in the reference example 2, first, the NMS 10 designates all of the NEs 1 to update their firmware (S911), and selects an NE 1 which updates its firmware before any of the other NEs 1 among the designated NEs 1 (S912). Then, the NMS 910 transfers a file for updating the firmware to the selected NE 1 (S 913). Upon receiving the file, the NE 1 updates its firmware using the received file (S914). The NMS 10 determines whether or not all of the NEs 1 have already updated their firmware (S915) and, if there is the NE 1 which has not updated its firmware yet, selects that NE 1 as an NE 1 which will update its firmware the next time (S916). Then, the steps S913 and the subsequent steps are repeated.

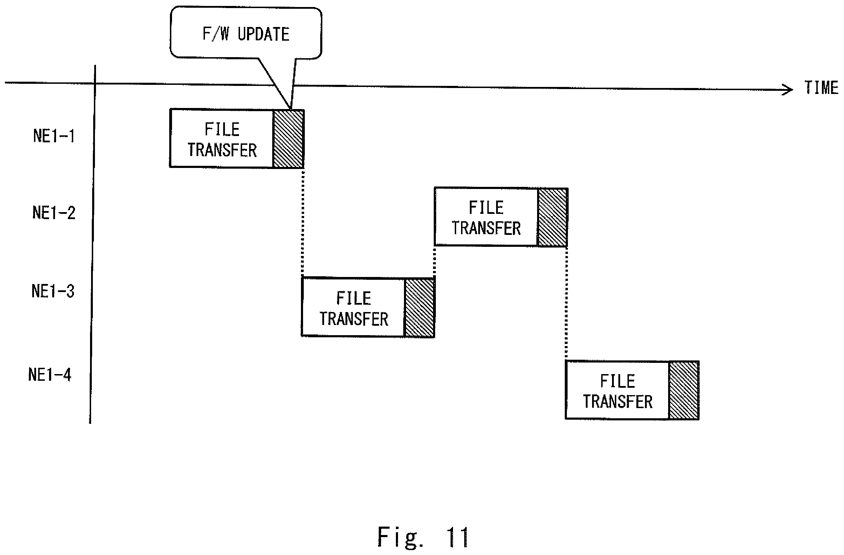

For example, assume that, in the reference example 2, the NEs are designated in the order of the NE 1-1, the NE 1-3, the NE 1-2, and the NE 1-4 in the configuration shown in Fig. 7. In this case, as shown in Fig. 11, first, the NE 1-1 designated before any of the other NEs 1 transfers the file and updates its firmware, and then, the transfer of the file and the update of the firmware are performed in the order of the NE 1-3, the NE 1-2 and NE 1-4 in accordance with order of the designated NE 1.

When the problems in the reference examples 1 and 2 are examined, in the reference example 1, it is seen that it is necessary to accurately manage the topology of the network. Therefore, there is a problem that it is difficult to determine which of the NEs 1 is placed at the end of the network when the network is a ring or mesh type network. Further, in the reference example 2, a time is taken before the NE 1 restarts (interval time) for each NE in a successive manner, thus causing a problem that the time required for updating the firmware of all of the NEs 1 is long.

Therefore, in the following exemplary embodiments, a method for collectively performing the update of firmware without requiring the interval time and without requiring the topology to be taken account of is provided.

### (Outline of exemplary embodiment)

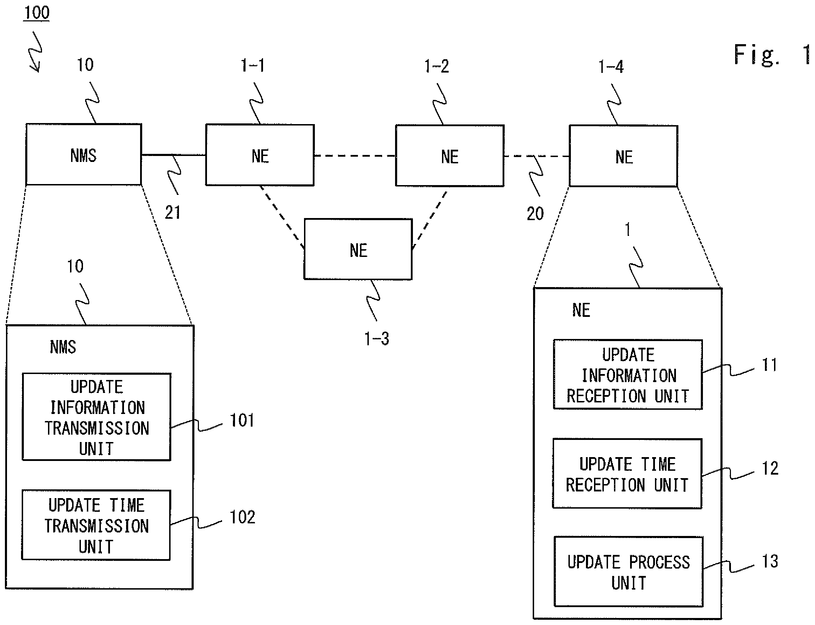

Fig. 1 shows an outline of a network system 100 according to an exemplary embodiment. As shown in Fig. 1, the network system 100 according to the exemplary embodiment, similarly to the reference example of Fig. 7, includes a plurality of NEs 1-1 to 1-4 that form a DCN, and an NMS 10 that manages the NEs 1-1 to 1-4. Further, the NEs 1-1 to 1-4 are connected to each other via a DCC 20, and the NE 1-1 is connected with the NMS 10 via a LAN 21.

The NMS 10 includes an update information transmission unit 101 and an update time transmission unit 102. The update information transmission unit 101 transmits update information for an update process that requires a suspension of communication to a plurality of NEs 1-1 to 1-4. The update time transmission unit 102 transmits an update time at which the update process is performed to the plurality of NEs 1-1 to 1-4 after the plurality of NEs 1-1 to 1-4 receive the update information.

Each of the plurality of NEs 1-1 to 1-4 includes an update information reception unit 11, an update time reception unit 12, and an update process unit 13. The update information reception unit 11 receives the update information transmitted from the NMS 10. The update time reception unit 12 receives the update time transmitted from the NMS 10 after the update information reception unit 11 receives the update information. The update process unit 13 performs the update process using the update information at the update time received from the NMS 10.

In the exemplary embodiments, first, the NMS 10 transfers a file to each of the NEs 1. When the NMS 10 confirms that the file transfer to the last NE 1 is completed, the NMS 10 sets a firmware update time that has been preliminarily designated by an operator or the like to each of the NEs 1. At the firmware update time, each of the NEs 1 performs the update of its respective firmware.

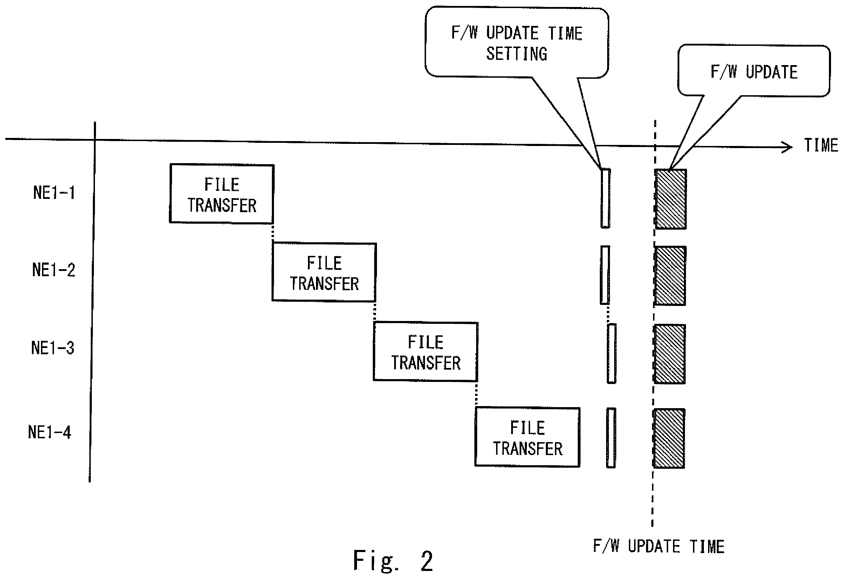

For example, when updating the firmware in the configuration of Fig. 1, as shown in Fig. 2, first, the NMS 10 transfers a file to the NEs 1-1 to 1-4. After the file transfer to the NEs 1-1 to 1-4 is completed, the NMS 10 sets the firmware update time to NEs 1-1 to 1-4. Then, at the firmware update time, the NEs 1-1 to 1-4 automatically perform the firmware update process.

Thus, in the exemplary embodiment, because the NEs update the firmware at the set time after the file transfer to all of the NE has been completed, the firmware update can be collectively performed without requiring the topology to be taken account of. Further, since the need for setting a different interval time for each of the NEs is eliminated, the firmware update time can be shortened.

### (First exemplary embodiment)

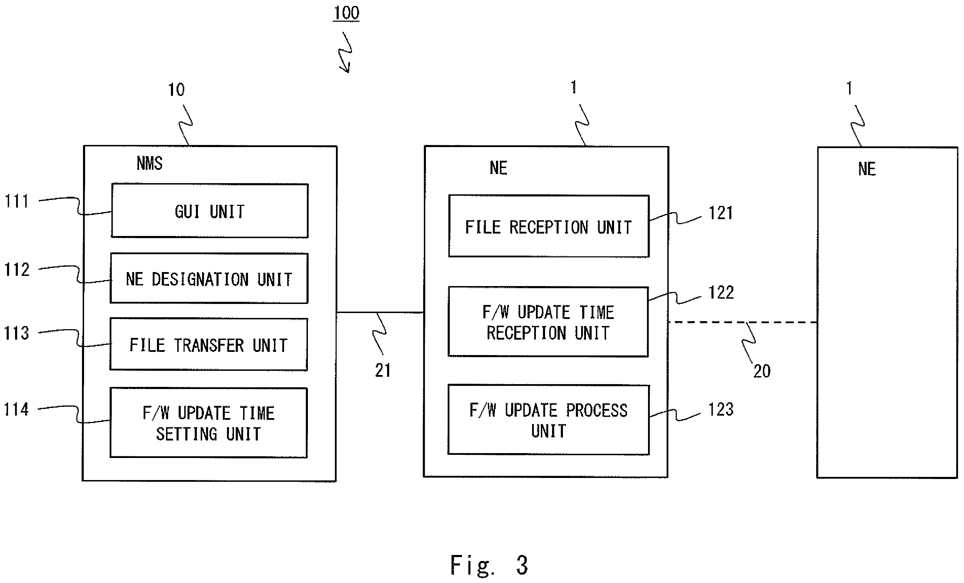

Hereinafter, a first exemplary embodiment will be described with reference to the drawings. Fig. 3 shows a configuration of a network system 100 according to the first exemplary embodiment. As shown in Fig. 3, the network system 100 according to the first exemplary embodiment, similarly to Fig. 1, includes a plurality of NEs 1 connected to each other via a DCC 20, and a NMS 10 connected to the NE 1 via a LAN 21.

The NMS 10 is a management apparatus for managing a plurality of NEs 1. The NMS 10 includes a GUI (Graphical User Interface) unit 111, a NE designation unit 112, a file transfer unit 113, and a firmware update time setting unit 114.

The GUI unit 111 is a user interface that displays a window and an icon and the like in the display unit of the NMS 10 and receives an input that is input by a user by using a mouse or a keyboard. The GUI unit 111 outputs various information items input by the user to the respective units. For example, the GUI unit 111 is an input unit through which a user inputs a firmware update time and a file and so on.

The NE designation unit (a communication apparatus designation unit) 112 designates an NE 1 that updates its firmware. The NE designation unit 112, in response to an input operation performed by the user through the GUI unit 111, designates an NE that updates its firmware.

The file transfer unit (update information transmission unit) 113 transmits the file for updating the firmware (update information) to the NE 1 designated by the NE designation unit 112. The file transfer unit 113 simultaneously transmits (broadcasts) the file to all of the NEs 1 that will update their firmware. Further, the file transmitted by the file transfer unit 113 may be selected by the user through the GUI unit 111.

The firmware update time setting unit (update time transmission unit) 114 transmits a firmware update time at which the firmware will be updated to each of the NEs 1 after the file transfer to the NE 1 designated by NE designation unit 112 is completed. The firmware update time setting unit 114 simultaneously transmits (broadcasts) the update time input by the user through the GUI unit 111 to all of the NEs 1 that will update their firmware. To prevent the update process of the firmware being performed before the transfer of the file, the update time is preferably a time that is later than the time by which all of the NEs 1 receive the file. In addition, because the communication service on the network is suspended due to the process for updating the firmware, the update time is set to a time at which the influence of the service suspension is small (for example, at night or the like).

The NE 1 is one of communication apparatuses forming a network. The NE 1 includes a file reception unit 121, a firmware update time reception unit 122, and a firmware update process unit 123.

The file reception unit (update information reception unit) 121 receives a file for updating the firmware transmitted from the NMS 10. Further, if the other NE 1 to which the file should be transferred is connected to the NE 1 of the file reception unit 121, the file reception unit 121 transfers the received file to the other NE 1.

The firmware update time reception unit 122 receives a firmware update time transmitted from the NMS 10. Further, if the other NE 1 to which the firmware update time should be transferred is connected to the NE 1 of the firmware update time reception unit 122, the firmware update time reception unit 122 transfers the firmware update time received to the other NE 1.

The firmware update process unit 123 performs the update process of the firmware at the firmware update time received from the NMS 10. At the firmware update time, the firmware update process unit 123 updates the firmware using the file received from the NMS 10 and restarts the NE 1. Here, an example in which the NE updates the firmware is described. However, the update is not limited to the firmware update. The update may be any update that requires a suspension of communication due to the restart or the like. For example, the update may be an update of a program of data other than the firmware.

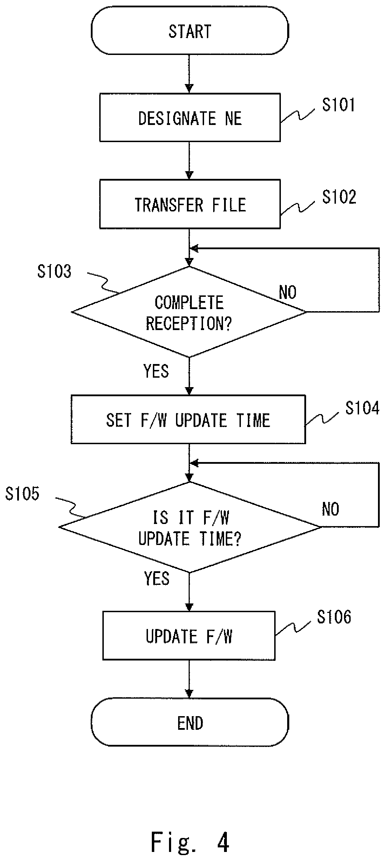

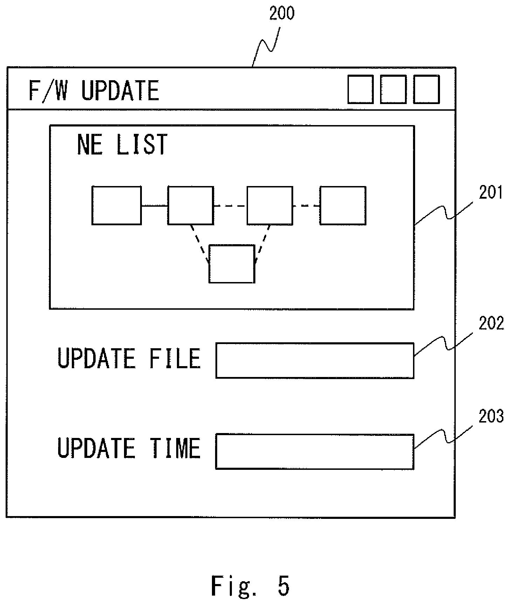

Next, the firmware update process according to the exemplary embodiment will be described using Figs. 4 and 5. For example, in the case of broadcasting the firmware for summer time to each of the NE 1 and collectively setting the firmware to each of the NE 1, the following process can be applied.

As shown in Fig. 4, first, the NE designation unit 112 of the NMS 10 designates an NE 1 that will update its firmware (S101). For example, the GUI unit 111 displays a firmware update window 200 as shown in Fig. 5 in the display unit of the NMS 10. The firmware update window 200 includes an NE list display part 201 that displays a list of the NEs 1. For example, the user operates the NE list display part 201 to select a network including a plurality of NEs 1. The plurality of NEs 1 may be selected by operating the NE list display part 201 so as to surround the entire network, or each of the NEs 1 may be selected individually. The NE list display part 201 is a NE designation input unit (a communication apparatus designation input unit) for receiving an input of designation of the NE 1 that updates its firmware. The NE list display part 201 may be implemented by either or both of the GUI unit 111 and the NE designation unit 112. Further, the firmware update window 200 includes an update file input part 202. The user inputs a file that should be sent in the update file input part 202. The update file input part 202 is a file designation input unit for receiving an input of a designation of a file that should be transmitted to the NE 1. The update file input part 202 may be implemented by either or both of the GUI unit 111 and the file transfer value 130. The file to be transmitted may be identified by having the user designate the file, or may be identified by identifying a predetermined file as the file to be transmitted. Therefore, the update file input part 202 may be referred to as a file identification unit (an update information identification unit) for identifying the file.

Next, the file transfer unit 113 of the NMS 10 transfers (transmits) the file for updating the firmware to all of the NEs 1 designated in step S101 (S102). For example, the file transfer unit 113 transmits the file using a broadcast or multicast to all of the NEs 1 in the network designated by the user in the firmware update window 200. At this time, the file transfer unit 113 transmits the file designated by the user in the firmware update window 200. Then, the file reception unit 121 of each of the NEs 1 receives the file transmitted from the file transfer unit 113.

Next, the NMS 10 waits for the completion of reception of the files in all of the NEs 1 (S103). For example, upon receiving the file, the file reception unit 121 of each of the NEs 1 sends a notification about the completion of reception to the NMS 10. The NMS 10 waits to receive a notification of the completion of reception from each and every one of the NEs 1.

In S103, when all of the NEs 1 receive the file, the firmware update time setting unit 114 of the NMS 10 transmits the firmware update time at which the firmware will be updated to each of the NEs 1 (S104). For example, the firmware update window 200 includes an update time input part 203. The user inputs the update time in the update time input part 203. The update time input part 203 is an update time input unit for receiving an input of the update time. The update time input part 203 may be implemented by either or both of the GUI unit 111 and the firmware update time setting unit 114. Note that the input of the update time may be entered at any timing before the transmission of the update time. For example, the input update time may include, in addition to the date and time of the update, a time elapsed after the completion of reception (e.g., 5 minutes after the completion thereof). The firmware update time setting unit 114 transmits the update time entered by the user to each of the NEs 1 designated by the user using a broadcast or multicast. Then, the firmware update time reception unit 122 of each of the NEs 1 receives the update time transmitted from the firmware update time setting unit 114.

Next, each of the NEs 1 waits until the firmware update time received in S104 (S105). When the firmware update time comes, the firmware update process unit 123 performs the update process of the firmware (S106). The firmware update process unit 123 updates the firmware using the file received in S102 and restarts the NE 1.

As described above, in this exemplary embodiment, in the network system including the plurality of NEs and the NMS, the NMS transmits the file for the update to the NE and sets the update time after all of the NEs have received the file. Then, when the update time comes, each of the NEs updates its firmware. Accordingly, since all of the NEs simultaneously update their firmware at the set update time, it is possible to significantly reduce the time required for the update process compared to the case where the firmware is successively updated in each of the NEs. For example, if the number of the NEs is M, the update time can be reduced to 1/M compared to the case where the firmware is successively updated. Further, because all of the NEs simultaneously update their firmware, it is unnecessary to recognize the topology such as the connection order of NEs. Therefore, it is possible to easily perform the process for updating the firmware.

### (Second Exemplary Embodiment)

Hereinafter, a second exemplary embodiment will be described with reference to the drawings. In this exemplary embodiment, an example of other network configurations will be described. The internal configurations of the NMS 10 and NE 1 are the same as those in the first exemplary embodiment.

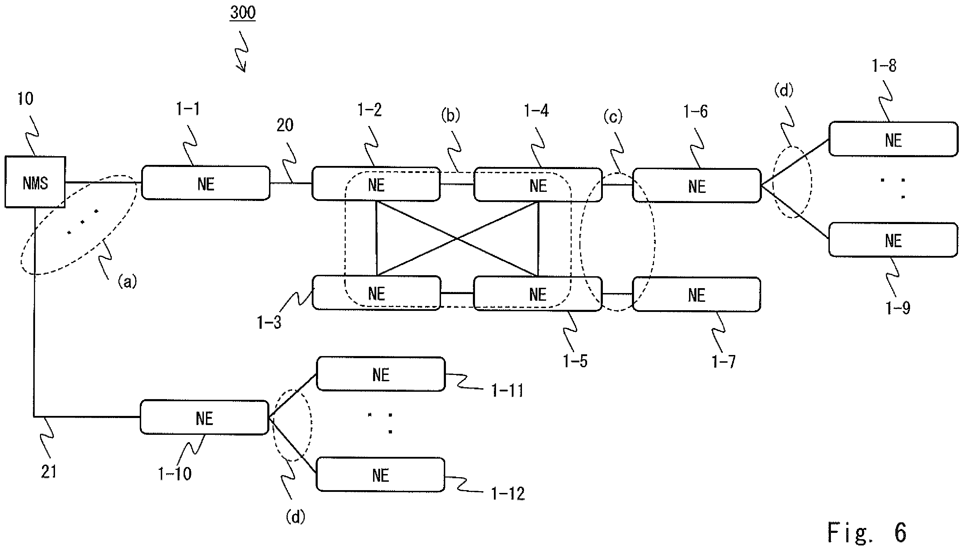

Fig. 6 shows a configuration of a network system 300 according to the second exemplary embodiment. As shown in Fig. 6, the network system 300 according to the second exemplary embodiment includes the NE 1-1 to 1-12, and the NMS 10.

As shown in Fig. 6(a), the NMS 10 is connected to a plurality of the NEs 1 via the LAN 21, and monitors a plurality of the networks. In this example, the NSM10 is connected to the NE 1-1 and NE 1-10, and monitors a network managed by the NE 1-1 and a network managed by the NE 1-10. As shown in Fig. 6(b), the NEs 1 forms a ring or mesh network. In this example, the NEs 1-2 to 1-5 are connected with each other via a DCC 20.

As shown in Fig. 6(c), two NEs 1 forming the ring network are connected to respective NEs 1. In this example, the NE 1-4 is connected to the NE 1-6, and the NE 1-5 is connected to NE 1-7. As shown in Fig. 6(d), one NE 1 is connected to a plurality of NEs 1. In this example, the NE 1-6 is connected to NEs 1-8 and 1-9, and NE 1-10 is connected to the NE 1-11 and NE 1-12.

In the network configuration including those shown in Figs. 6(a) to 6 (d), the same effects as those in the first exemplary embodiment can be obtained. For example, by simultaneously updating the firmware in the NEs 1-1 to 1-12, the update process can be shortened. Further, different update times may be set in the network of the NEs 1-1 to NE 1-9 and the network of the NEs 1-10 to NEs 1-12, so that each network may be updated at its appropriate time. For example, a different update time may be set for each network when the networks are configured in a redundant manner or the like. A different update time may be set for each group of the NEs 1 in order to distribute the load or the influenced area. That is, a plurality of networks (groups) including a plurality of the NEs 1 may be designated, and the file transfer, the update time setting, and the firmware update may be performed for each designated network.

The present invention is not limited to the above exemplary embodiments. Various changes appropriately are possible without departing from the scope of the present invention.

The configurations in the aforementioned exemplary embodiments may be formed of hardware, software, or both of them, and may be formed of one hardware entity or one software entity or a plurality of hardware or software entities. The functions (processes) of the wireless apparatus may be implemented by a computer including a CPU, a memory or the like. For example, a network management program for performing the network management in the exemplary embodiments may be stored in the storage device and each function may be implemented by executing the network management program stored in the storage device by the CPU.

While the present invention has been described with reference to the exemplary embodiments, the present invention is not limited to the above exemplary embodiments. Various changes that can be understood by those skilled in the art can be made to the configurations and the details of the present invention within the scope of the present invention.

This application is based upon and claims the benefit of priority from Japanese Patent Application No. 2014-027147, filed on February 17, 2014, the disclosure of which is incorporated herein in its entirety by reference.

### Reference Signs List

- 1: NE
- 11: UPDATE INFORMATION RECEPTION UNIT
- 12: UPDATE TIME RECEPTION UNIT
- 13: UPDATE PROCESS UNIT
- 20: DCC
- 21: LAN
- 100,300: NETWORK SYSTEM
- 101: UPDATE INFORMATION TRANSMISSION UNIT
- 102: UPDATE TIME TRANSMISSION UNIT
- 111: GUI UNIT
- 112: NE DESIGNATION UNIT
- 113: FILE TRANSFER UNIT
- 114: FIRMWARE UPDATE TIME SETTING UNIT
- 121: FILE RECEPTION UNIT
- 122: FIRMWARE UPDATE TIME RECEPTION UNIT
- 123: FIRMWARE UPDATE PROCESS UNIT
- 200: FIRMWARE UPDATE WINDOW
- 201: NE LIST DISPLAY PART
- 202: UPDATE FILE INPUT PART
- 203: UPDATE TIME INPUT PART

## Claims

1. A network system comprising a plurality of communication apparatuses forming a network and a management apparatus connected to the plurality of communication apparatuses so that the management apparatus can communicate with the plurality of communication apparatuses, wherein
the management apparatus comprises:
update information transmission means for transmitting update information for an update process to the plurality of communication apparatuses, the update process requiring a suspension of communication; and
update time transmission means for transmitting an update time to the plurality of communication apparatuses after the plurality of communication apparatuses received the update information, the update time being a time at which the update process is performed, and
each of the plurality of communication apparatuses comprises;
update information reception means for receiving the transmitted update information;
update time reception means for receiving the transmitted update time after the update information reception means received the update information; and
update process means for performing the update process using the update information at the received update time.

2. The network system according to Claim 1, wherein the update process is a process for updating a firmware of the plurality of communication apparatuses.

3. The network system according to Claim 1 or 2, wherein
the management apparatus comprises communication apparatus designation means for designating the plurality of communication apparatuses that perform the update process,
the update information transmission means transmits the update information to the plurality of designated communication apparatuses, and
the update time transmission means transmits the update time to the plurality of designated communication apparatuses.

4. The network system according to any one of Claims 1 to 3, wherein
the management apparatus comprises input means through which a user inputs the update time, and
the update time transmission means transmits the input update time to the plurality of communication apparatuses.

5. The network system according to any one of Claims 1 to 4,
wherein the update time transmission means transmits the update time when completion of reception of the update information is confirmed in all of the plurality of communication apparatuses.

6. The network system according to Claim 5, wherein
the update information reception means notifies the management apparatus of the reception of the update information, and
the update time transmission means transmits the update time when the notification is received from all of the plurality of communication apparatuses.

7. The network system according to any one of Claims 1 to 6,
wherein
the update information reception means transfers the received update information to another communication apparatus among the plurality of communication apparatuses, and
the update time reception means transfers the received update time to the another communication apparatus.

8. A management apparatus connected to a plurality of communication apparatuses forming a network so that the management apparatus can communicate with the plurality of communication apparatuses, the management apparatus comprising:
update information transmission means for transmitting update information for an update process to the plurality of communication apparatuses, the update process requiring a suspension of communication; and
update time transmission means for transmitting an update time to the plurality of communication apparatuses after the plurality of communication apparatuses received the update information, the update time being a time at which the update process is performed.

9. A management apparatus connected to a plurality of communication apparatuses forming a network so that the management apparatus can communicate with the plurality of communication apparatuses, the management apparatus comprising:
communication apparatus designation input means for receiving an input of designation of at least one communication apparatus among the plurality of communication apparatuses,
update information identification means for identifying update information for an update process to be transmitted to the designated communication apparatus, the update process requiring a suspension of communication, and
update time input means for receiving an input of an update time to be transmitted to the designated communication apparatus after the designated communication apparatus received the update information, the update time being a time at which the update process is performed.

10. A communication apparatus forming a network with other communication apparatuses and connected to a management apparatus so that the communication apparatus can communicate with the management apparatus, the communication apparatus comprising:
update information reception means for receiving update information for an update process transmitted from the management apparatus, the update process requiring a suspension of communication;
update time reception means for receiving an update time transmitted from the management apparatus after the update information reception means received the update information; and
update process means for performing the update process using the update information at the received update time.

11. A management method in a network system comprising a plurality of communication apparatuses forming a network, and a management apparatus connected to the plurality of communication apparatuses so that the management apparatus can communicate with the plurality of communication apparatuses, wherein
the management apparatus transmits update information for an update process to the plurality of communication apparatuses, the update process requiring a suspension of communication,
the management apparatus transmits an update time to the plurality of communication apparatuses after the plurality of communication apparatuses received the update information, the update time being a time at which the update process is performed,
the plurality of communication apparatuses receive the transmitted update information,
the plurality of communication apparatuses receive the transmitted update time after received the update information, and
the plurality of communication apparatuses perform the update process using the update information at the received update time.

12. A management method in a management apparatus connected to a plurality of communication apparatuses forming a network so that the management apparatus can communicate with the plurality of communication apparatuses, the management method comprising:
transmitting update information for an update process to the plurality of communication apparatuses, the update process requiring a suspension of communication, and
transmitting an update time to the plurality of communication apparatuses after the plurality of communication apparatuses received the update information, the update time being a time at which the update process is performed.

13. A management method in a management apparatus connected to a plurality of communication apparatuses forming a network, the management method comprising:
receiving an input of designation for at least one communication apparatus among the plurality of communication apparatuses,
identifying update information for an update process to be transmitted to the designated communication apparatus, the update process requiring a suspension of communication, and
receiving an input of an update time to be transmitted to the designated communication apparatus after the designated communication apparatus received the update information, the update time being a time at which the update process is performed.

14. A communication method in a communication apparatus forming a network with other communication apparatuses and connected to a management apparatus so that the communication apparatus can communicate with the management apparatus, the communication method comprising:
receiving update information for an update process to be transmitted from the management apparatus, the update process requiring a suspension of communication,
receiving the update time transmitted from the management apparatus after received the update information, and
performing the update process using the update information at the received update time.
